# EUROPEAN PATENT APPLICATION

(11) **EP 4 725 739 A1**
(43) Date of publication of application: **15.04.2026**
(21) Application number: 24866880.8
(22) Date of filing: 14.05.2024
(51) Int. Cl.: B60L 1/00, B60L 15/00, B60L 53/22, B60L 50/60, H02M 7/00, H02M 1/00, H02J 7/02

(54) **ALL-IN-ONE POWER SUPPLY APPARATUS FOR ELECTRIC VEHICLE, POWER ASSEMBLY, AND ELECTRIC VEHICLE**

(30) Priority: 22.09.2023 CN 202311247606
(71) Applicant: Huawei Digital Power Technologies Co., Ltd., Shenzhen, Guangdong 518043 (CN)
(72) Inventor: FENG, Ningbo, Shenzhen, Guangdong 518043 (CN); KONG, Xuejuan, Shenzhen, Guangdong 518043 (CN); YU, Wenhai, Shenzhen, Guangdong 518043 (CN); LI, Dong, Shenzhen, Guangdong 518043 (CN)
(74) Representative: Isarpatent
(86) International application number: PCT/CN2024/093129
(87) International publication number: WO 2025/060456

(57) **Abstract**

This application provides an all-in-one power supply apparatus for an electric vehicle, a powertrain, and an electric vehicle. The all-in-one power supply apparatus includes a housing, and a first control circuit, a second control circuit, a third control circuit, a first group of bridge arms, a second group of bridge arms, a third group of bridge arms, and a fourth group of bridge arms that are accommodated in the housing. The first control circuit controls the first group of bridge arms to receive a first alternating current. The second control circuit controls two ends of the second group of bridge arms to output a first direct current or receives power supplied by a power battery. The third control circuit controls bridge arm middle points of the third group of bridge arms to output a second direct current, and control an output end of the fourth group of bridge arms to output a second direct current. In this application, a bridge arm circuit and a control circuit are shared, to reduce use of components, reduce costs, reduce a size and a weight, and make the all-in-one power supply apparatus more compact. The shared control circuit can further improve a collaboration capability between components, to respond quickly.

## Description

### CROSS-REFERENCE TO RELATED APPLICATIONS

This application claims priority to Chinese Patent Application No. 202311247606.0, filed with the China National Intellectual Property Administration on September 22, 2023 and entitled "ALL-IN-ONE POWER SUPPLY APPARATUS FOR ELECTRIC VEHICLE, POWERTRAIN, AND ELECTRIC VEHICLE", which is incorporated herein by reference in its entirety.

### TECHNICAL FIELD

This application relates to the field of electric vehicle control, and in particular, to an all-in-one power supply apparatus for an electric vehicle, a powertrain, and an electric vehicle.

### BACKGROUND

With development of electric vehicles, components of electric vehicles gradually develop in a direction of high integration, low costs, and a small size. For example, in recent years, three-in-one integration of a motor, an electric control, and a reducer emerges. Integration of a plurality of components can save a connection cable bundle between components, a fastening bracket of a single component, and the like, and has significant advantages in costs and space utilization. However, most of all-in-one solutions in the current market are pure physical integration solutions. Although different modules are assembled together, components are basically not reused. Consequently, costs and space saved by the pure physical integration solutions are limited.

### SUMMARY

According to a first aspect, an embodiment of this application provides an all-in-one power supply apparatus for an electric vehicle, where the all-in-one power supply apparatus includes a housing, and a first control circuit, a second control circuit, a third control circuit, a first group of bridge arms, a second group of bridge arms, a third group of bridge arms, and a fourth group of bridge arms that are accommodated in the housing. The housing includes a plurality of mounting holes, the plurality of mounting holes are respectively configured to mount a first alternating current connector, a second alternating current connector, a first direct current connector, and a second direct current connector, the first alternating current connector is configured to connect to an alternating current power supply, the second alternating current connector is configured to connect to a drive motor of the electric vehicle, the first direct current connector is configured to connect to a power battery of the electric vehicle, and the second direct current connector is configured to connect to a low voltage battery or an in-vehicle load of the electric vehicle. The first control circuit is configured to control the first group of bridge arms to receive a first alternating current through the first alternating current connector. The second control circuit is configured to control two ends of the second group of bridge arms to output a first direct current through the first direct current connector or receive, through the first direct current connector, power supplied by the power battery. The third control circuit is configured to control bridge arm middle points of the third group of bridge arms to output a second alternating current through the second alternating current connector, and control an output end of the fourth group of bridge arms to output a second direct current through the second direct current connector, where a voltage of the second direct current is less than a voltage of the first direct current and a supply voltage of the power battery.

The all-in-one power supply apparatus provided in this application may share a bridge arm circuit, a power supply circuit, a filter circuit, and a control circuit. The power supply circuit, the bridge arm circuit, and the filter circuit are shared or reused, so that use of components can be reduced, and costs of the power supply apparatus can be reduced. Therefore, a volume and a weight of the power supply apparatus is reduced, and the all-in-one power supply apparatus is more compact. In addition, the shared control circuit may further improve a collaboration capability between the components, to monitor a running status of a component such as a drive motor in real time, and respond quickly. This meets various requirements of the vehicle.

In a possible implementation, the all-in-one power supply apparatus includes a first direct current bus, the first group of bridge arms include a plurality of PFC bridge arms, the first direct current bus is configured to connect two ends of the plurality of PFC bridge arms, and the first control circuit is configured to: control bridge arm middle points of the plurality of PFC bridge arms to receive the first alternating current, and control the two ends of the plurality of PFC bridge arms to output a direct current to the first direct current bus. The first group of bridge arms receive, under the action of the first control circuit, the first alternating current input by the alternating current power supply, to perform power calibration on the first alternating current, and convert the first alternating current after the power calibration into a direct current for outputting.

In a possible implementation, the all-in-one power supply apparatus includes a first transformer, the second group of bridge arms include a plurality of second groups of primary side bridge arms and a plurality of second groups of secondary side bridge arms, the first direct current bus is configured to connect two ends of the plurality of second groups of primary side bridge arms, and the second control circuit is configured to: control the two ends of the plurality of second groups of primary side bridge arms to receive the direct current transmitted by the first direct current bus, and control a bridge arm middle point of the plurality of second groups of primary side bridge arms to output an alternating current to a primary side winding of the first transformer. The second control circuit is configured to control bridge arm middle points of the plurality of second groups of secondary side bridge arms to receive an alternating current generated by a secondary side winding of the first transformer, and control two ends of the plurality of second groups of secondary side bridge arms to output the first direct current.

The second control circuit controls a switching transistor in the second group of bridge arms to alternately turn on and off, so that a direction of a current at the primary side windings alternately changes, thereby obtaining primary side alternating current energy at the primary side winding. The switching transistors in the second group of bridge arms are controlled to alternately turn on and off, so that a secondary side circuit converts the alternating current obtained from the primary side bridge arm into the direct current for outputting.

In a possible implementation, the all-in-one power supply apparatus includes a second transformer and a second direct current bus, the fourth group of bridge arms include a fourth group of primary side bridge arms and a fourth group of secondary side bridge arms, the fourth group of primary side bridge arms are configured to output an alternating current to a primary side winding of the second transformer, a secondary side winding of the second transformer is configured to connect to the fourth group of secondary side bridge arms, the fourth group of secondary side bridge arms are configured to output the second direct current through the second direct current connector, the second direct current bus is configured to connect two ends of the second group of bridge arms, two ends of the third group of bridge arms, two ends of the fourth group of primary side bridge arms, and the first direct current connector. The third control circuit is configured to: control the two ends of the third group of bridge arms to receive, through the second direct current bus, power supplied by the power battery; and control the two ends of the fourth group of primary side bridge arms to receive, through the second direct current bus, the first direct current or power supplied by the power battery.

The third group of bridge arms may include three switching transistor bridge arms, and a bridge arm middle point of each switching transistor bridge arm is separately configured to connect to a phase winding of the drive motor. The third control circuit is configured to drive running of an upper bridge arm switching transistor and a lower bridge arm switching transistor of the switching transistor bridge arm, and control bridge arm middle points of the three switching transistor bridge arms to respectively output three phases of currents to supply power to the drive motor. The drive motor is configured to drive a wheel of the electric vehicle to rotate, so that the electric vehicle travels.

In a possible implementation, the plurality of mounting holes include a compressor connector mounting hole, and the compressor connector mounting hole is configured to mount a compressor connector. The all-in-one power supply apparatus includes a fifth group of bridge arms. The second control circuit is configured to control two ends of the fifth group of bridge arms to receive, through the second direct current bus, the first direct current or power supplied by the power battery, and control bridge arm middle points of the fifth group of bridge arms to output a third alternating current through the compressor mounting connector, where the third alternating current is configured to drive a compressor of the electric vehicle.

When the power battery needs to be cooled down, the second control circuit controls the fifth group of bridge arms, so that the bridge arm middle points of the fifth group of bridge arms output the third alternating current through the compressor connector. After the motor in the compressor receives the third alternating current output by the fifth group of bridge arms, the compressor is driven to work.

In a possible implementation, the plurality of mounting holes include a PTC connector mounting hole, the PTC connector mounting hole is configured to mount a PTC connector, the all-in-one power supply apparatus includes a sixth group of bridge arms, and the second control circuit is configured to: control two ends of the sixth group of bridge arms to receive, through the second direct current bus, the first direct current or power supplied by the power battery, and control bridge arm middle points of the sixth group of bridge arms to output a third direct current through the PTC connector, where the third alternating current is configured to supply power to a PTC of the electric vehicle.

When the power battery needs to be heated, the second control circuit controls the sixth group of bridge arms, so that the bridge arm middle points of the sixth group of bridge arms output the third alternating current through the PTC connector. After the PTC receives the third alternating current output by the sixth group of bridge arms, the PTC starts to work, to heat heat-carrying fluid in a heat loop of the power battery. The heat-carrying fluid in the heat loop of the power battery conducts heat to the power battery, to heat the power battery.

In a possible implementation, the compressor connector mounting hole and the PTC connector mounting hole are distributed on a same side surface of the housing. A heating part and a cooling part are placed on a same side surface, so that energy can be used more effectively. In addition, the heating part and the cooling part are placed on the same side surface, so that a temperature management system of the electric vehicle is more compact and centralized, and a pipe for fluid to flow, a cable, and a sensor element can be reused, thereby saving costs and facilitating arrangement and maintenance.

In a possible implementation, the plurality of mounting holes include a first alternating current connector mounting hole, a second alternating current connector mounting hole, a first direct current connector mounting hole, a second direct current connector mounting hole, and a mounting hole, the first alternating current connector mounting hole is configured to mount the first alternating current connector, the second alternating current connector mounting hole is configured to mount the second alternating current connector, the first direct current connector mounting hole is configured to mount the first direct current connector, and the second direct current connector mounting hole is configured to mount the second direct current connector; the first alternating current connector mounting hole and the second alternating current connector mounting hole are respectively distributed on two different side surfaces of the housing; and a spacing between the first alternating current connector mounting hole and the first direct current connector mounting hole is greater than a spacing between the second alternating current connector and the second direct current connector mounting hole.

The first alternating current connector mounting hole and the second alternating current connector mounting hole are disposed on the two different side surfaces of the housing, so that a layout inside the housing can be better planned and optimized. In addition, different alternating current mounting holes are separately disposed, so that a risk of power cable crossing or interfering with another connection can be reduced, thereby improving electrical safety of a device and reducing a possibility of electromagnetic interference. In addition, because the spacing between the first alternating current connector mounting hole and the first direct current connector mounting hole is greater than the spacing between the second alternating current connector and the second direct current connector mounting hole, the housing may have more internal space to accommodate various bridge arm circuits and power supply circuits. In addition, reliability, security, and usability of the all-in-one power supply apparatus can be further improved, and a possibility of a misoperation can be reduced, thereby simplifying maintenance and repair.

In a possible implementation, the housing includes a signal connector mounting hole, and the signal connector mounting hole is configured to mount a signal connector. The third control circuit is configured to receive, through the signal connector, at least one of an acceleration signal generated by an accelerator pedal of the electric vehicle and a braking signal generated by a brake pedal. In response to at least one of the acceleration signal or the braking signal, the third control circuit controls a current parameter of the second alternating current output by the bridge arm middle points of the third group of bridge arms.

In a possible implementation, the all-in-one power supply apparatus includes an isolation apparatus, and the isolation apparatus is configured to isolate electrical interference between the first control circuit, the second control circuit, and the third control circuit; the first control circuit is configured to send a first reset watchdog signal to the second control circuit, and the second control circuit is configured to perform fault monitoring on the first control circuit based on the first reset watchdog signal; and the second control circuit is configured to send a second reset watchdog signal to the third control circuit, and the third control circuit is configured to perform fault monitoring on the second control circuit based on the second reset watchdog signal.

The isolation apparatus may be an optical coupler, a magnetic isolator, or the like. In this application, a newly added watchdog mechanism is used to ensure that the first control circuit, the second control circuit, and the third control circuit can keep running stably. In addition, a reset watchdog signal is periodically sent, so that each control circuit may be in a normal running state. When each control circuit stops responding or is faulty, the watchdog mechanism is used to trigger a recovery operation, to reduce downtime.

In a possible implementation, the all-in-one power supply apparatus includes a power conversion circuit, and the power conversion circuit is configured to: receive, through the second direct current connector, power supplied by the low voltage battery, and output the third direct current to supply power to the first control circuit, the second control circuit, and the third control circuit.

Because working voltages of the control circuits are different, the power conversion circuit is configured to receive, through the second direct current connector, power supplied by the low voltage battery, and output the third direct current, to provide different working voltages for the control circuits. In this way, a quantity of power supply circuits is reduced, and maintenance and repair complexity is reduced. In addition, space is saved, design and cabling are simplified, and power conversion efficiency is improved.

In a possible implementation, the second control circuit is configured to: in response to that a temperature of the power battery is higher than a first set threshold, control a bridge arm middle point of the fifth bridge arm to output the third alternating current; in response to that the temperature of the power battery is lower than a second set threshold, control a bridge arm middle point of the sixth bridge arm to output the third direct current; and in response to converting the multi-phase alternating current into the first direct current by the first group of bridge arms and the second group of bridge arms, output a first control signal to the third control circuit, where the first control signal indicates the third control circuit to stop controlling the bridge arm middle points of the third group of bridge arms to output the second alternating current.

When the temperature of the power battery is lower than the second set threshold, it indicates that the temperature of the power battery is low. The second control circuit controls the bridge arm middle point of the sixth bridge arm to output the third alternating current, so that the PTC works, thereby increasing the temperature of the power battery.

To avoid unexpected torque output of the drive motor in a charging process of the power battery, in response to converting the multi-phase alternating current into the first direct current by the first group of bridge arms and the second group of bridge arms, the third control circuit stops controlling the bridge arm middle points of the third group of bridge arms to output the second alternating current. Therefore, the output torque of the drive motor is not controlled, and safety of the vehicle is ensured.

In a possible implementation, the third control circuit is configured to: in response to the acceleration signal, control the bridge arm middle points of the third group of bridge arms to output the second alternating current; and in response to that a battery level of the power battery is lower than a third set threshold, control the bridge arm middle points of the third group of bridge arms to stop outputting the second alternating current. When the battery level of the power battery is excessively low, the electric vehicle may suddenly lose power. As a result, the vehicle may stop in an unsafe or inconvenient place. If the vehicle is parked in the middle of a road or in an emergency stop zone, a risk of a traffic accident is increased. In this way, the bridge arm middle points of the third group of bridge arms are controlled to stop outputting the second alternating current, to avoid a sudden danger during driving.

In a possible implementation, the third control circuit is configured to: when a battery level of the low voltage battery is lower than a set threshold, control, by the first control circuit, the first group of bridges to receive the first alternating current through the first alternating current connector, and control, by the second control circuit, the two ends of the second group of bridge arms to output the first direct current to the second direct current bus through the first direct current connector. The fourth group of bridge arms are connected to the second direct current bus. An output end of the fourth group of bridge arms outputs the second direct current through the second direct current connector, and charges the low voltage battery through the second direct current. This ensures that the control circuit has a normal working voltage.

According to a second aspect, this application provides a powertrain, including the all-in-one power supply apparatus according to the first aspect and a drive motor, where bridge arm middle points of a third group of bridge arms are configured to connect to a multi-phase winding of the drive motor and output a second alternating current to the multi-phase winding of the drive motor.

According to a third aspect, this application provides an electric vehicle, where the electric vehicle includes the all-in-one power supply apparatus in the first aspect or includes the powertrain in the second aspect.

### BRIEF DESCRIPTION OF DRAWINGS

FIG. 1 is a diagram 1 of an all-in-one power supply apparatus for an electric vehicle according to this application;
FIG. 2 is a diagram of a power supply structure;
FIG. 3 is a diagram of a structure of a first group of bridge arms;
FIG. 4 is a diagram of a structure of a primary side bridge arm according to this application;
FIG. 5 is a diagram of a structure of a secondary side bridge arm according to this application;
FIG. 6 is a diagram 2 of an all-in-one power supply apparatus for an electric vehicle according to this application;
FIG. 7 is a diagram 3 of an all-in-one power supply apparatus for an electric vehicle according to this application;
FIG. 8 is a diagram 4 of an all-in-one power supply apparatus for an electric vehicle according to this application;
FIG. 9 is a diagram 5 of an all-in-one power supply apparatus for an electric vehicle according to this application;
FIG. 10 is a diagram of a connection between control circuits;
FIG. 11 is a diagram 6 of an all-in-one power supply apparatus for an electric vehicle according to this application;
FIG. 12A is a diagram 1 of a current flow direction of an all-in-one power supply apparatus for an electric vehicle according to this application;
FIG. 12B is a diagram 2 of a current flow direction of an all-in-one power supply apparatus for an electric vehicle according to this application;
FIG. 12C is a diagram 3 of a current flow direction of an all-in-one power supply apparatus for an electric vehicle according to this application;
FIG. 12D is a diagram 4 of a current flow direction of an all-in-one power supply apparatus for an electric vehicle according to this application; and
FIG. 13 is another diagram of an all-in-one power supply apparatus for an electric vehicle according to this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that in description of this application, "at least one" means one or more, and "a plurality of" means two or more. In view of this, in embodiments of the present invention, "a plurality of" may also be understood as "at least two". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects. In addition, it should be understood that in description of this application, terms such as "first" and "second" are merely used for distinguishing and description, but should not be understood as indicating or implying relative importance, or should not be understood as indicating or implying a sequence.

It should be noted that, in embodiments of this application, "connection" means an electrical connection, and a connection between two electrical elements may be a direct or indirect connection between the two electrical elements. For example, a connection between A and B may be a direct connection between A and B, or may be an indirect connection between A and B through one or more other electrical elements. For example, that A is connected to B may also be that A is directly connected to C, C is directly connected to B, A and B are connected through C.

With development of electric vehicles, fusion between components inside a vehicle is a development trend. An all-in-one power supply apparatus for an electric vehicle provided in this application can reduce component costs and share some structures, thereby saving circuits with similar functions. In addition, a space volume can be further reduced, thereby providing larger vehicle utilization space. In addition, a collaboration capability between components can be improved, and driving experience of a user can be improved.

The all-in-one power supply apparatus for the electric vehicle provided in embodiments of this application is described below with reference to the accompanying drawings.

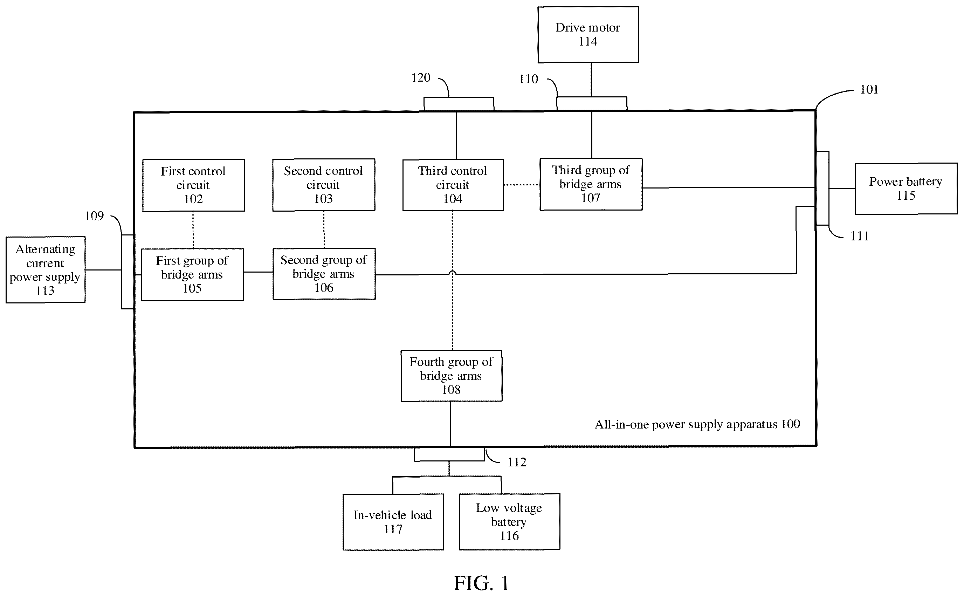

FIG. 1 is a diagram 1 of an all-in-one power supply apparatus for an electric vehicle according to this application. The all-in-one power supply apparatus 100 includes a housing 101, and a first control circuit 102, a second control circuit 103, a third control circuit 104, a first group of bridge arms 105, a second group of bridge arms 106, a third group of bridge arms 107, and a fourth group of bridge arms 108 that are accommodated in the housing 101.

The housing 101 includes a plurality of mounting holes, the plurality of mounting holes are respectively configured to mount a first alternating current connector 109, a second alternating current connector 110, a first direct current connector 111, and a second direct current connector 112, the first alternating current connector 109 is configured to connect to an alternating current power supply 113, the second alternating current connector 110 is configured to connect to a drive motor 114 of the electric vehicle, the first direct current connector 111 is configured to connect to a power battery 115 of the electric vehicle, and the second direct current connector 112 is configured to connect to a low voltage battery 116 or an in-vehicle load 117 of the electric vehicle. The low voltage battery 116 may also supply power to the in-vehicle load 117, and the first control circuit 102 is configured to control the first group of bridge arms 105 to receive the first alternating current through the first alternating current connector 109. The second control circuit 103 is configured to control two ends of the second group of bridge arms 106 to output a first direct current through the first direct current connector 111 or receive, through the first direct current connector 111, power supplied by the power battery 115. The third control circuit 104 is configured to control bridge arm middle points of the third group of bridge arms 107 to output a second alternating current through the second alternating current connector 110, and control an output end of the fourth group of bridge arms 108 to output a second direct current through the second direct current connector 112, where a voltage of the second direct current is less than a voltage of the first direct current and a supply voltage of the power battery 115.

The first alternating current connector 109, the second alternating current connector 110, the first direct current connector 111, and the second direct current connector 112 are respectively embedded in corresponding mounting holes. Each connector may be conductive, and is configured to conduct a bridge arm or a circuit connected to two ends of the connector. For example, the first alternating current connector 109 may be respectively configured to connect to the first group of bridge arms 105 and the alternating current power supply 113, so that the first group of bridge arms 105 is connected to the alternating current power supply 113. In addition, before being mounted in the mounting hole, the connector may be further protected by filling sealant, to protect an internal component of the housing 101.

Each bridge arm in the first group of bridge arms 105, the second group of bridge arms 106, the third group of bridge arms 107, and the fourth group of bridge arms 108 may include an upper bridge arm switching transistor and a lower bridge arm switching transistor. The upper bridge arm switching transistor or the lower bridge arm switching transistor may be an insulated gate bipolar transistor (insulated gate bipolar transistor, IGBT) and an anti-parallel diode thereof, a metal oxide semiconductor field effect transistor (metal oxide semiconductor field effect transistor, MOSFET), or the like. A specific structure inside the switching transistor is not limited in this application.

The first control circuit 102, the second control circuit 103, and the third control circuit 104 may be specifically a central processing unit (central processing unit, CPU), another general purpose processor, a digital signal processor (digital signal processor, DSP), an application specific integrated circuit (application specific integrated circuit, ASIC), a field-programmable gate array (field-programmable gate array, FPGA) or another programmable logic device, a discrete gate or transistor logic device, a discrete hardware component, or the like.

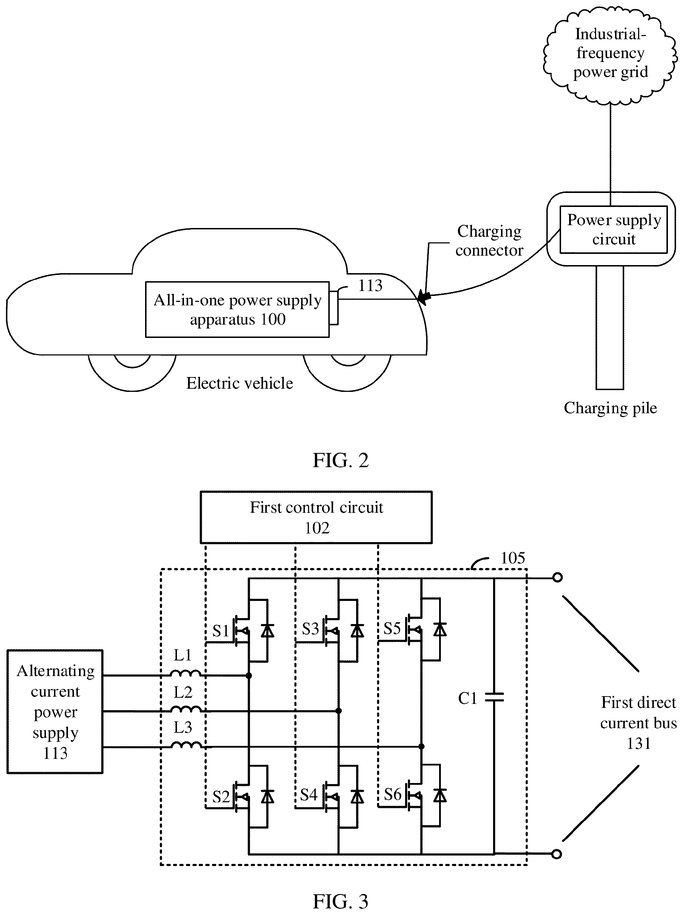

FIG. 2 is a diagram of a power supply structure. Generally, an electric vehicle may be charged by using a charging pile, and the charging pile mainly includes a power supply circuit and a charging connector. One end of the power supply circuit is coupled to an industrial-frequency power grid, and the other end is coupled to the charging connector through a cable. The power supply circuit may use the industrial-frequency power grid as the alternating current power supply 113, receive an alternating current provided by the industrial-frequency power grid, and convert the received alternating current into charging electric energy that adapts to the electric vehicle. The charging connector is inserted into a charging socket of the electric vehicle, so that the charging connector is coupled to the first alternating current connector 109.

The all-in-one power supply apparatus 100 includes a first direct current bus 131, the first group of bridge arms 105 includes a plurality of power factor correction (power factor correction, PFC) circuit bridge arms, the first direct current bus is configured to connect two ends of the plurality of PFC bridge arms, and the first control circuit 102 is configured to: control bridge arm middle points of the plurality of PFC bridge arms to receive the first alternating current, and control the two ends of the plurality of PFC bridge arms to output a direct current to the first direct current bus.

The first group of bridge arms 105 are configured to receive, under the action of the first control circuit 102, the first alternating current input by the alternating current power supply 113, to perform power calibration on the first alternating current, and convert the first alternating current after the power calibration into a direct current for outputting.

FIG. 3 is a diagram of a structure of a first group of bridge arms. The first group of bridge arms 105 include inductors L1, L2, and L3, switching transistors S1 to S6. One end of L1, L2, and L3 is connected to the alternating current power supply 113. One end of first electrodes of S1, S3, and S5 and one end of capacitor C1 are connected to one side of the first direct current bus. Second electrodes of S1, S3, and S5 are respectively connected to the other ends of L1, L2, and L3. Second electrodes of S2, S4, and S6 and the other end of C1 are connected to the other side of the first direct current bus. First electrodes of S2, S4, and S6 are respectively connected to the other ends of L1, L2, and L3. Control electrodes of the switching transistors S1 to S6 are connected to the first control circuit 102. The first control circuit 102 implements functions such as rectification by controlling on and off of the switching transistors.

In a possible implementation, the all-in-one power supply apparatus 100 includes a first transformer, the second group of bridge arms 106 include a plurality of second groups of primary side bridge arms 1061 and a plurality of second groups of secondary side bridge arms 1062, the first direct current bus is configured to connect two ends of the plurality of second groups of primary side bridge arms 1061, and the second control circuit 103 is configured to: control the two ends of the plurality of second groups of primary side bridge arms 1061 to receive the direct current transmitted by the first direct current bus, and control a bridge arm middle point of the plurality of second groups of primary side bridge arms 1061 to output an alternating current to a primary side winding of the first transformer; and control bridge arm middle points of the plurality of second groups of secondary side bridge arms 1062 to receive an alternating current generated by a secondary side winding of the first transformer, and control two ends of the plurality of second groups of secondary side bridge arms 1062 to output the first direct current.

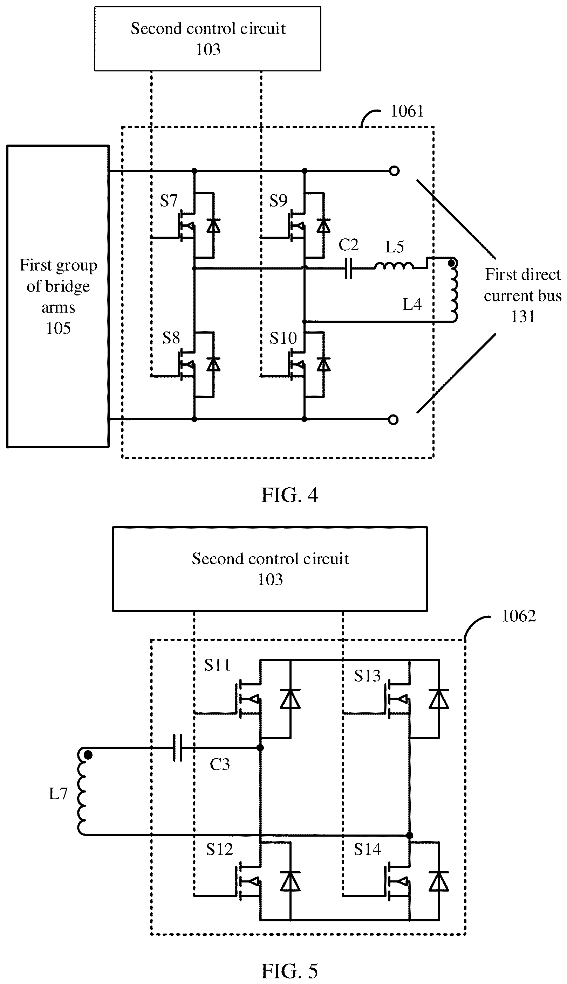

For example, FIG. 4 is a diagram of a structure of a primary side bridge arm according to this application. The plurality of primary side bridge arms are configured to receive the direct current transmitted by the first direct current bus, and control the bridge arm middle point of the plurality of second groups of primary side bridge arms 1061 to output the alternating current to the primary side winding of the first transformer. The first transformer may include a primary side winding L4, and one of the plurality of second groups of primary side bridge arms 1061 may include: a switching transistor S7, a switching transistor S8, a switching transistor S9, a switching transistor S10, a capacitor C2, and an inductor L5.

The switching transistors S7, S8, S9, and S 10 form a bridge rectifier circuit structure. A first electrode of the switching transistor S7 is separately coupled to a first electrode of the switching transistor S9 and one side of the first direct current bus. A second electrode of the switching transistor S7 is separately coupled to a first electrode of the switching transistor S8 and the other side of the first direct current bus. A second electrode of the capacitor C2 is coupled to a first end of the inductor L5. A second end of the inductor L5 is coupled to a first end of a primary side winding L4 of the first transformer. A second electrode of the switching transistor S9 is separately coupled to a second end of the primary side winding L4 and a first electrode of the switching transistor S10. A second electrode of the switching transistor S8 is separately coupled to a second electrode of the switching transistor S10 and the first direct current bus. A control electrode of the switching transistor S7, a control electrode of the switching transistor S8, a control electrode of the switching transistor S9, and a control electrode of the switching transistor S10 are coupled to the second control circuit 103.

When the switching transistors S6 and S10 are turned on, a current output by the first bridge arm circuit flows from the switching transistor S6 to the switching transistor S10, that is, flows from a first end of the primary side winding L4 to a second end, thereby generating positive-half-period electric energy of primary side alternating current energy. When the switching transistors S8 and S9 are turned on, the current output by the first bridge arm circuit flows from the switching transistor S9 to the switching transistor S8, that is, flows from the second end of the primary side winding to the first end, thereby generating negative-half-period electric energy of the primary side alternating current energy. The second control circuit 103 controls the switching transistors S7 and S10 to alternately turn on and off, so that directions of currents at the primary side winding L4 alternately change, thereby obtaining the primary side alternating current energy at the primary side winding L4.

The bridge arm middle point of the plurality of second groups of secondary side bridge arms 1062 receives the alternating current generated by the secondary side winding of the first transformer, and the two ends of the plurality of second groups of secondary side bridge arms 1062 are controlled to output the first direct current. For example, FIG. 5 is a diagram of a structure of a secondary side bridge arm according to this application. One of the plurality of second groups of secondary side bridge arms 1062 includes a switching transistor S11, a switching transistor S12, a switching transistor S13, a switching transistor S14, and a capacitor C3. The first transformer includes a secondary side winding L7.

A first electrode of the switching transistor S11 is coupled to a first electrode of the switching transistor S13. A second electrode of the switching transistor S11 is separately coupled to a second end of a secondary side winding L8 and a first electrode of the switching transistor S12. A first end of the secondary side winding L8 and the first end of the primary side winding L4 are mutually homonymous ends. The first end of the secondary side winding L8 is coupled to one end of the capacitor C3. The other end of the capacitor C3 is coupled to a second electrode of the switching transistor S13. The first electrode of the switching transistor S13 is coupled to a first output end of a second secondary side circuit. A second electrode of the switching transistor S13 is coupled to a first electrode of the switching transistor S14. A second electrode of the switching transistor S12 and a second electrode of the switching transistor S14 are coupled to a second output end of the second secondary side circuit.

When the switching transistors S12 and S13 are turned on, a current in the primary side winding L4 flows from the first end to the second end. Because electromagnetic coupling exists between the primary side winding L4 and the secondary side winding L7, and a first end of the secondary side winding L7 and a first end of the primary side winding are mutually homonymous ends, the current in the secondary side winding L7 flows from the second end to the first end. To be specific, the current flows from the switching transistor S12 to the switching transistor S13, and an output path of a secondary side bridge arm is formed.

When the switching transistors S11 and S14 are turned on, the current in the primary side winding L4 flows from the second end to the first end. Therefore, the current in the secondary side winding L7 flows from the first end to the second end. To be specific, the current flows from the switching transistor S14 to the switching transistor S11, and the output path of the secondary side bridge arm is formed. It can be seen from the foregoing process that, the second control circuit 103 controls the switching transistors S11 and S14, and the switching transistors S12 and S 13 to alternately turn on and off, so that the secondary side circuit converts the alternating current obtained from the primary side bridge arm into the direct current for output. It should be noted that the foregoing circuit structures of the primary side bridge arm and the secondary side bridge arm are merely examples. In a specific implementation structure, there are a plurality of possible implementations of the primary side bridge arm and the secondary side bridge arm. These implementations are not listed one by one in embodiments of this application.

When the output end of the secondary side bridge arm is connected to the power battery 115, the first group of bridge arms 105 are controlled through the first control circuit 102, and the second group of bridge arms 106 are controlled through the second control circuit 103, so that the alternating current power supply 113 charges the power battery 115.

After the first group of bridge arms 105 and the second group of bridge arms 106 are combined, there are two working modes: a charging mode and a discharging mode. In the charging mode, the first group of bridge arms 105 and the second group of bridge arms 106 receive charging electric energy provided by the alternating current power supply 113, and respectively supply the received charging electric energy to the power battery 115. In the discharge mode, the first group of bridge arms 105 and the second group of bridge arms 106 receive the battery electric energy provided by the power battery 115, and supply the battery electric energy to a load outside the vehicle.

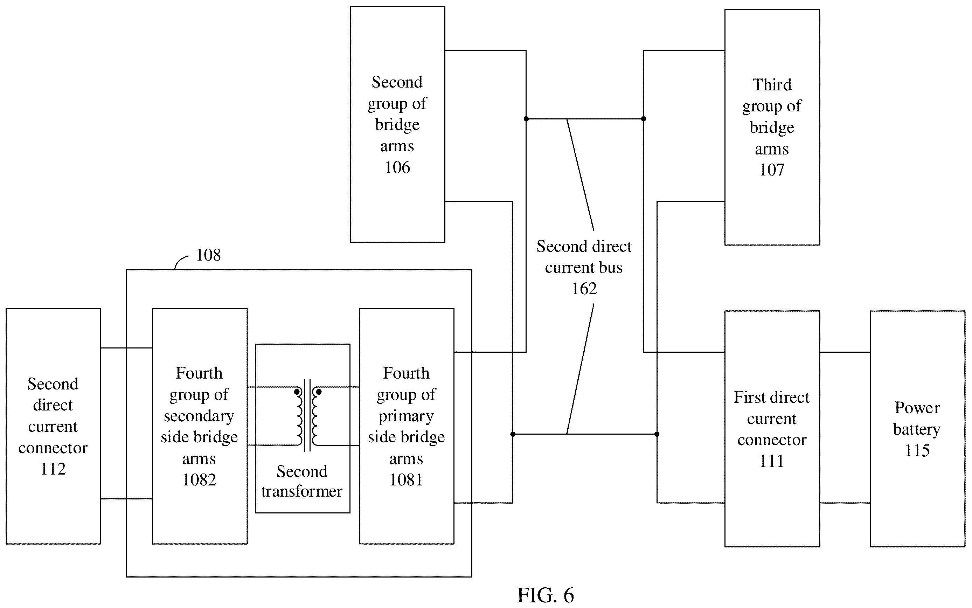

In a possible implementation, FIG. 6 is a diagram 2 of an all-in-one power supply apparatus for an electric vehicle according to this application. The all-in-one power supply apparatus 100 includes a second transformer and a second direct current bus 162, the fourth group of bridge arms 108 include a fourth group of primary side bridge arms 1081 and a fourth group of secondary side bridge arms 1082, the fourth group of primary side bridge arms 1081 are configured to output an alternating current to a primary side winding of the second transformer, the second direct current bus 162 is configured to connect two ends of the second group of bridge arms 106, two ends of the third group of bridge arms 107, two ends of the fourth group of primary side bridge arms 1081, and the first direct current connector 111. The third control circuit 104 is configured to: control the two ends of the third group of bridge arms 107 to receive, through the second direct current bus 162, power supplied by the power battery 115; and control the two ends of the fourth group of primary side bridge arms 1081 to receive, through the second direct current bus 162, the first direct current or power supplied by the power battery 115.

The third group of bridge arms 107 may include three switching transistor bridge arms, and a bridge arm middle point of each switching transistor bridge arm is separately configured to connect to a phase winding of the drive motor 114. The third control circuit 104 is configured to drive running of an upper bridge arm switching transistor and a lower bridge arm switching transistor of the switching transistor bridge arm, and control bridge arm middle points of the three switching transistor bridge arms to respectively output three phases of currents to supply power to the drive motor 114. The drive motor 114 is configured to drive a wheel of the electric vehicle to rotate, so that the electric vehicle travels.

For the fourth group of primary side bridge arms 1081 included in the fourth group of bridge arms 108, refer to the structure of the primary side bridge arms shown in FIG. 4. For a specific structure of the fourth group of secondary side bridge arms 1082, refer to the structure of the secondary side bridge arms shown in FIG. 5. Correspondingly, the second direct current bus 162 is respectively configured to connect to the two ends of the second group of bridge arms 106, the two ends of the third group of bridge arms 107, the two ends of the fourth group of primary side bridge arms 1081, and the first direct current connector 111.

The third control circuit 104 controls the fourth group of primary side bridge arms 1081 to receive the direct current transmitted by the second direct current bus 162, controls bridge arm middle points of the fourth group of primary side bridge arms 1081 to output the alternating current to the primary side winding of the second transformer, controls bridge arm middle points of the fourth group of secondary side bridge arms 1082 to receive the alternating current generated by the secondary side winding of the second transformer, and controls two ends of the fourth group of secondary side bridge arms 1082 to output the second direct current to provide the second direct current to the low voltage battery 116 or the in-vehicle load 117 of the electric vehicle. The voltage of the second direct current is less than the voltage of the first direct current and a supply voltage of the power battery 115.

The second direct current bus 162 is configured to connect to the two ends of the second group of bridge arms 106, the two ends of the third group of bridge arms 107, the two ends of the fourth group of primary side bridge arms 1081, and the first direct current connector 111. In this way, at least one of the following functions can be implemented:
1. The third group of bridge arms 107 receive, through the second direct current bus 162, the power supplied by the power battery 115 or the power supplied by the second group of bridge arms 106, to drive the drive motor 114 of the electric vehicle.
2. The fourth group of primary side bridge arms 1081 in the fourth group of bridge arms 108 receive, through the second direct current bus 162, the power supplied by the second group of bridge arms 106 or the power battery 115. The two ends of the fourth group of secondary side bridge arms 1082 in the fourth group of bridge arms 108 output the second direct current to the second direct current connector 112, to provide the second direct current to the low voltage battery 116 or the in-vehicle load 117 of the electric vehicle.
3. The second group of bridge arms 106 output the first direct current to the first direct current connector 111 through the second direct current bus 162, so that the alternating current power supply 113 charges the power battery 115.

In addition, because the second direct current bus 162 is configured to connect to the two ends of the second group of bridge arms 106, the two ends of the third group of bridge arms 107, the two ends of the fourth group of primary side bridge arms 1081, and the first direct current connector 111, a filter circuit may be shared. In this way, it is ensured that all bridge arm circuits connected to the second direct current bus 162 are protected by filtering, to improve consistency and stability of an entire all-in-one power supply apparatus 100.

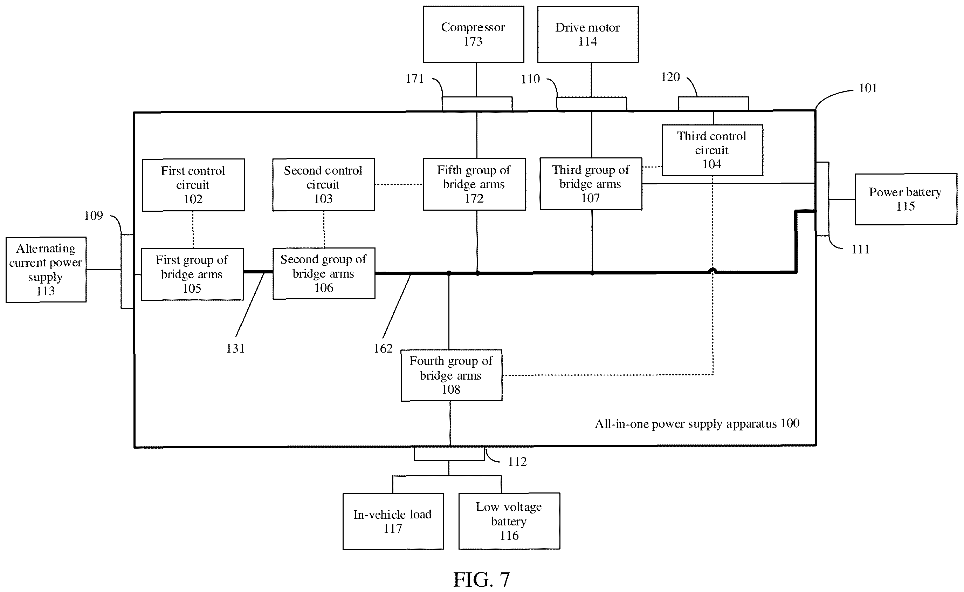

FIG. 7 is a diagram 3 of an all-in-one power supply apparatus for an electric vehicle according to this application. A plurality of mounting holes include a compressor connector mounting hole, and the compressor connector mounting hole is configured to mount a compressor connector 171. The all-in-one power supply apparatus 100 includes a fifth group of bridge arms 172. The second control circuit 103 is configured to: control two ends of the fifth group of bridge arms 172 to receive, through the second direct current bus 162, the first direct current or power supplied by the power battery 115, and control the bridge arm middle points of the fifth group of bridge arms 172 to output a third alternating current through the compressor connector 171. The third alternating current is configured to drive a compressor 173 of the electric vehicle.

The compressor 173 generally includes a compressor head and a motor. The compressor head includes one or more cylinders, and each cylinder has a piston for compressing gas. The motor rotates to transfer motion to the piston through a connecting rod mechanism. The piston moves up and down in the cylinder. Coolant is compressed, cooled, expanded, and heated in a cycle to complete a cooling cycle.

When the power battery 115 needs to be cooled down, the second control circuit 103 controls the fifth group of bridge arms 172, so that the bridge arm middle points of the fifth group of bridge arms 172 output the third alternating current through the compressor connector 171. After the motor in the compressor 173 receives the third alternating current output by the fifth group of bridge arms 172, the compressor 173 is driven to work. The compressor 173 is configured to cool the flowing coolant through compression. The coolant flows into a condenser, and is further cooled through the condenser. The coolant cooled by the compressor 173 and the condenser enters a heat exchanger, and performs heat exchange with the power battery 115 at the heat exchanger, to cool the power battery 115.

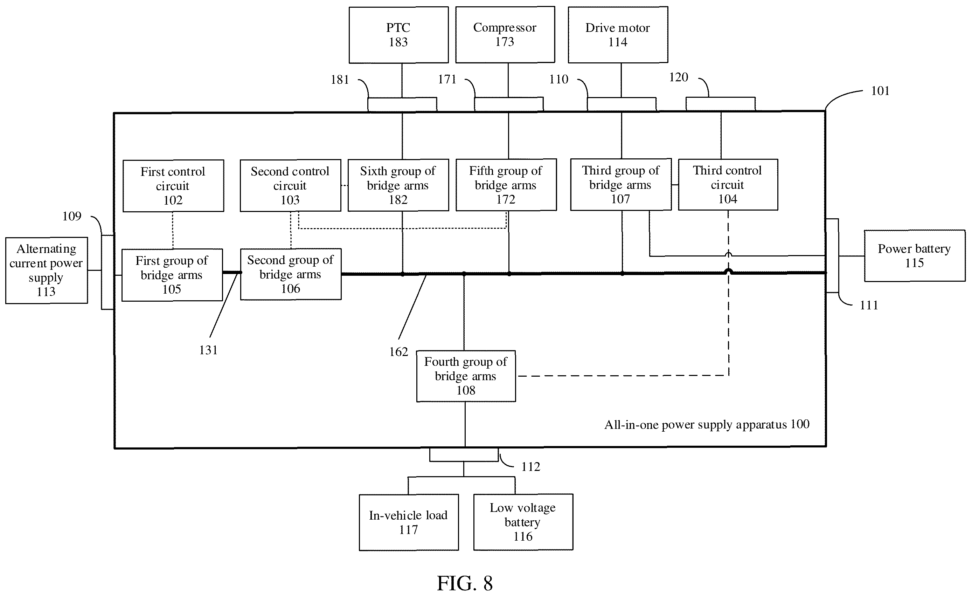

FIG. 8 is a diagram 4 of an all-in-one power supply apparatus for an electric vehicle according to this application. A plurality of mounting holes include a positive temperature coefficient (positive temperature coefficient, PTC) connector mounting hole, and the PTC connector mounting hole is used to mount a PTC connector 181. The all-in-one power supply apparatus 100 includes a sixth group of bridge arms 182. The second control circuit 103 is configured to: control two ends of the sixth group of bridge arms 182 to receive, through the second direct current bus 162, the first direct current or power supplied by the power battery 115, and control bridge arm middle points of the sixth group of bridge arms 182 to output a third direct current through the PTC connector 181. The third alternating current is configured to supply power to the PTC 183 of the electric vehicle.

When the power battery 115 needs to be heated, the second control circuit 103 controls the sixth group of bridge arms 182, so that the bridge arm middle points of the sixth group of bridge arms 182 output the third alternating current through the PTC connector 181. After the PTC 183 receives the third alternating current output by the sixth group of bridge arms 182, the PTC 183 starts to work, to heat heat-carrying fluid in a heat loop of the power battery 115. The heat heat-carrying fluid in the heat loop of the power battery 115 conducts heat to the power battery 115, to heat the power battery 115.

It should be noted that a controllable switch and the like may be further connected between each group of bridge arms and the connector. A filter circuit, a filter capacitor, and the like may be further disposed in each group of bridge arms. A designer may also adaptively adjust a quantity of filter circuits, a quantity of filter capacitors, a connection position, and the like according to a requirement. This is not limited herein.

In a possible implementation, still refer to FIG. 8. The compressor connector mounting hole and the PTC connector mounting hole are distributed on a same side surface of the housing 101.

To enable the compressor 173 and the PTC 183 to be mounted on a same side, the compressor connector mounting hole and the PTC connector 181 may be distributed on the same side surface of the housing 101. Because the compressor 173 is configured to cool the power battery 115, and the PTC 183 is configured to heat the power battery 115, a heating part and a cooling part are placed on a same side surface, and energy can be used more effectively. In addition, the heating part and the cooling part are placed on the same side surface, so that a temperature management system of the electric vehicle is more compact and centralized, and a pipe for fluid to flow, a cable, and a sensor element can be reused, thereby saving costs and facilitating arrangement and maintenance.

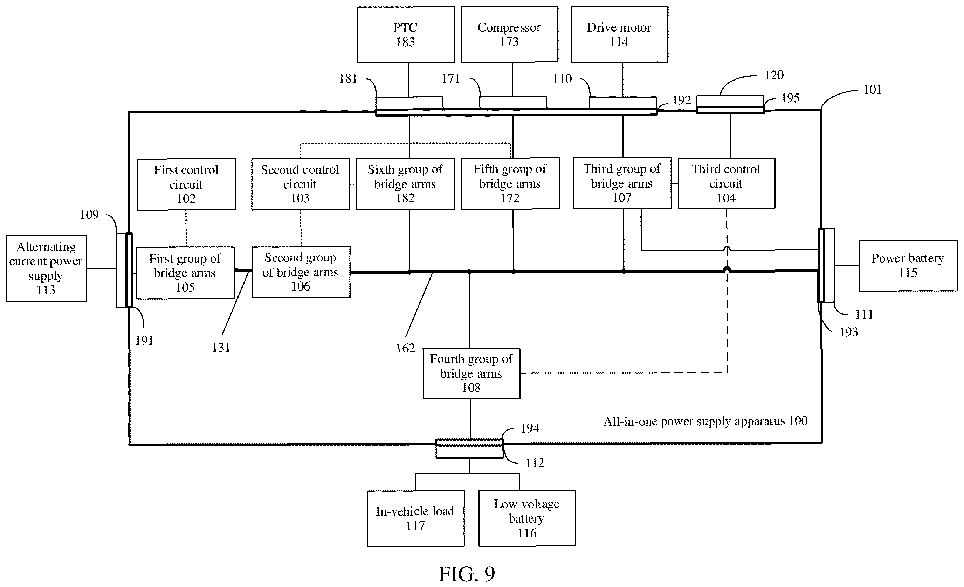

FIG. 9 is a diagram 5 of an all-in-one power supply apparatus for an electric vehicle according to this application. In a possible implementation, the plurality of mounting holes include a first alternating current connector mounting hole 191, a second alternating current connector mounting hole 192, a first direct current connector mounting hole 193, a second direct current connector mounting hole 194, and a signal connector mounting hole 120. The first alternating current connector mounting hole 191 is configured to mount a first alternating current connector 109. The second alternating current connector mounting hole is configured to mount a second alternating current connector 110. The first direct current connector mounting hole is configured to mount a first direct current connector 111. The second direct current connector mounting hole 194 is configured to mount a second direct current connector 112. The signal connector mounting hole 120 is configured to mount a signal connector 195. The third control circuit 104 is configured to receive, through the signal connector 195, at least one of an acceleration signal generated by an accelerator pedal of the electric vehicle and a braking signal generated by a brake pedal.

The first alternating current connector mounting hole and the second alternating current connector mounting hole are respectively distributed on two different side surfaces of the housing 101. A spacing between the first alternating current connector mounting hole and the first direct current connector mounting hole is greater than a spacing between the second alternating current connector 110 and the second direct current connector mounting hole.

The first alternating current connector mounting hole and the second alternating current connector mounting hole are disposed on the two different side surfaces of the housing 101, so that a layout inside the housing 101 can be better planned and optimized. In addition, different alternating current mounting holes are separately disposed, so that a risk of power cable crossing or interfering with another connection can be reduced, thereby improving electrical safety of a device and reducing a possibility of electromagnetic interference. In addition, because the spacing between the first alternating current connector mounting hole and the first direct current connector mounting hole is greater than the spacing between the second alternating current connector 110 and the second direct current connector mounting hole, the housing 101 may have more internal space to accommodate various bridge arm circuits and power supply circuits. In addition, reliability, security, and usability of the all-in-one power supply apparatus 100 can be further improved, and a possibility of a misoperation can be reduced, thereby simplifying maintenance and repair.

In a possible implementation, the third control circuit 104 is configured to receive at least one of the acceleration signal generated by the accelerator pedal of the electric vehicle and the braking signal generated by the brake pedal. In response to at least one of the acceleration signal or the braking signal, the third control circuit controls a current parameter of the second alternating current output by the bridge arm middle points of the third group of bridge arms 107.

The third control circuit 104 may be used as a vehicle control unit (vehicle control unit, VCU), and the third control circuit 104 is configured to receive an analog signal generated by the accelerator pedal of the electric vehicle. The analog parameter signal includes one or more of an acceleration signal, a brake signal, an atmospheric pressure signal, a vacuum pressure signal, a current signal, a voltage signal, and temperature information. When a driver needs to change a current vehicle speed or a driving direction of the electric vehicle, the analog signal is obtained from a driver input apparatus such as an accelerator pedal, a brake pedal, or a steering wheel, to control the third group of bridge arms 107 to receive, through the second direct current bus 162, power supplied by the power battery 115 or power supplied by the second group of bridge arms 106, to drive the drive motor 114 of the electric vehicle. The third control circuit 104 is configured to deliver a control signal to the third group of bridge arms 107. The control signal indicates a running status of the drive motor.

In some embodiments, the control signal includes torque indication information. The torque indication information includes a front axis torque status signal and/or a rear axis torque status signal, and a front axis torque saturation status signal and/or a rear axis torque saturation status signal. In some other embodiments, the control signal includes rotation speed indication information. The rotation speed indication information includes a rotation speed of a front axle motor and/or a rotation speed of a rear axle motor.

In addition, because the third control circuit 104 integrates functions of a vehicle controller and a motor controller, the third control circuit 104 may monitor a running status of the drive motor 114 in real time, and respond quickly, to meet a driver requirement. In addition, the third control circuit 104 can also sense a requirement of the driver quickly and make a corresponding adjustment, so that driving experience is smooth.

In a possible implementation, communication may be established between the first control circuit 102, the second control circuit 103, and the third control circuit 104 in a wired transmission or wireless transmission manner. For example, wired transmission may include a wired local area network (local area network, LAN), a serial bus, a controller area network (controller area network, CAN), and power line communication (power line communication, PLC). A CAN bus may further specifically include a power train (power train), a chassis (chassis), a body (body/comfort), a cockpit (cockpit/infotainment), an advanced driver assistance system (ADAS), and the like. Wireless transmission may include manners such as 6G/5G/4G/3G/2G, a general packet radio service (general packet radio service, GPRS), a wireless network (Wi-Fi), and Bluetooth.

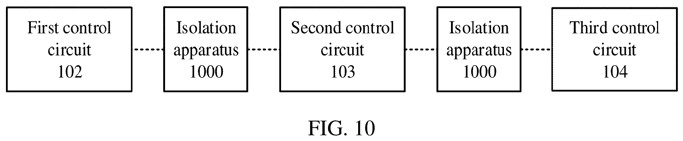

Signals sent by the first control circuit 102, the second control circuit 103, and the third control circuit 104 do not share ground, and the signals do not share ground may cause problems such as electrical interference, noise, and a bit error. Therefore, to ensure communication security between the first control circuit 102, the second control circuit 103, and the third control circuit 104, in a possible implementation, FIG. 10 is a diagram of connection between control circuits. The all-in-one power supply apparatus 100 includes an isolation apparatus 1000. The isolation apparatus is configured to isolate electrical interference between the first control circuit 102, the second control circuit 103, and the third control circuit 104.

The isolation apparatus may be an optical coupler, a magnetic isolator, or the like. An input signal is converted into an optical signal by using the optical coupler, and then the optical signal is converted into an output signal, to achieve high insulation and electrical isolation effect. Alternatively, a transformer or magnetic element is used to separate the input signal from the output signal. In this way, even if potentials of the first control circuit 102, the second control circuit 103, and the third control circuit 104 are different, each control circuit can normally complete communication.

To enable each control circuit to work normally, the second control circuit 103 may be configured to monitor the first control circuit 102, and the third control circuit 104 may be configured to monitor the second control circuit 103. In a possible implementation, the first control circuit 102 is configured to send a first reset watchdog signal to the second control circuit 103, and the second control circuit 103 is configured to perform fault monitoring on the first control circuit 102 based on the first reset watchdog signal. The second control circuit 103 is configured to send a second reset watchdog signal to the third control circuit 104, and the third control circuit 104 is configured to perform fault monitoring on the second control circuit 103 based on the second reset watchdog signal.

A specific timing period may be set in the first control circuit 102. The first control circuit 102 may send a reset watchdog signal to the second control circuit 103 in each timing period, and the signal may be sent by using a specific instruction or operation. If the second control circuit 103 does not receive the reset watchdog signal within specified time, a watchdog timer inside the second control circuit 103 times out. In this case, this indicates that the first control circuit 102 is faulty or deadlocked. The second control circuit 103 may trigger a recovery mechanism, so that the first control circuit 102 recovers to a normal state. Similarly, the third control circuit 104 may also be configured to monitor the second control circuit 103. In this application, a newly added watchdog mechanism is used to ensure that the first control circuit 102, the second control circuit 103, and the third control circuit 104 can keep running stably. In addition, a reset watchdog signal is periodically sent, so that each control circuit may be in a normal running state. When each control circuit stops responding or is faulty, the watchdog mechanism is used to trigger a recovery operation, to reduce downtime.

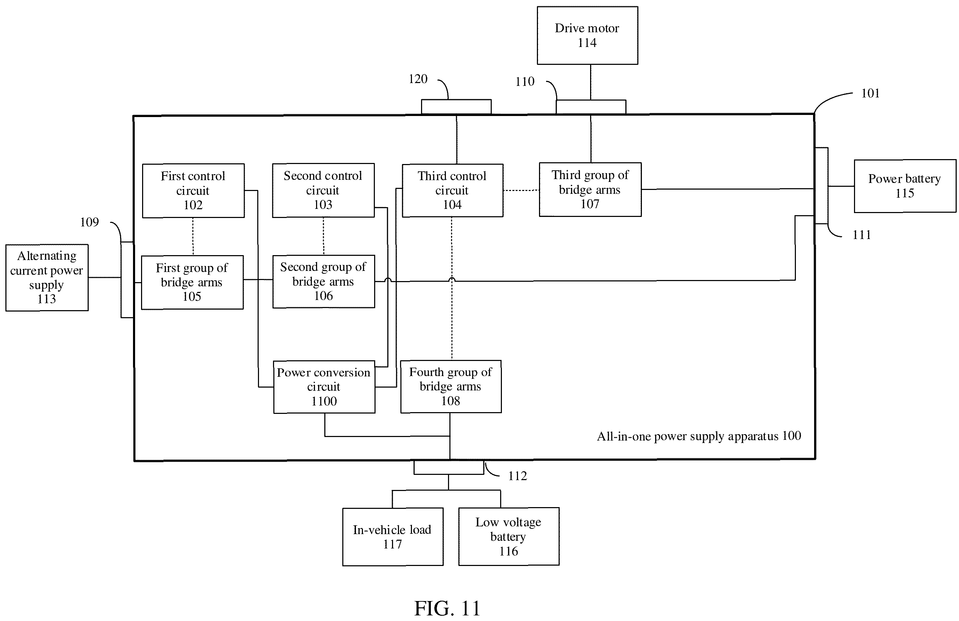

FIG. 11 is a diagram 6 of an all-in-one power supply apparatus for an electric vehicle according to this application. In a possible implementation, the all-in-one power supply apparatus 100 includes a power conversion circuit 1100, and the power conversion circuit is configured to: receive, through the second direct current connector 112, power supplied by the low voltage battery 116, and output the third direct current to supply power to the first control circuit 102, the second control circuit 103, and the third control circuit 104. The low voltage battery 116 is configured to supply power to the first control circuit 102, the second control circuit 103, and the third control circuit 104. Because working voltages of the control circuits are different, the power conversion circuit is configured to receive, through the second direct current connector 112, power supplied by the low voltage battery 116, and output the third direct current, to provide different working voltages for the control circuits. In this way, a quantity of power supply circuits is reduced, and maintenance and repair complexity is reduced. In addition, space is saved, design and cabling are simplified, and power conversion efficiency is improved.

In a possible implementation, the second control circuit 103 is configured to: in response to that a temperature of the power battery 115 is higher than a first set threshold, control a bridge arm middle point of the fifth bridge arm to output the third alternating current; in response to that the temperature of the power battery 115 is lower than a second set threshold, control a bridge arm middle point of the sixth bridge arm to output the third direct current; and in response to converting the multi-phase alternating current into the first direct current by the first group of bridge arms 105 and the second group of bridge arms 106, output a first control signal to the third control circuit 104, where the first control signal indicates the third control circuit 104 to stop controlling the bridge arm middle points of the third group of bridge arms 107 to output the second alternating current.

Because the temperature has a large impact on the power battery 115, it is difficult to make full use of the power battery 115 at a high temperature or a low temperature. For example, when the power battery 115 is charged or discharged at a low temperature, a lithium plating phenomenon occurs. As a result, a capacity of the power battery 115 is attenuated, and even a safety risk of the power battery 115 is caused. Therefore, the electric vehicle is allowed to travel only after the power battery 115 is heated/cooled to a specific temperature.

For example, the first set threshold may be any value in a normal working temperature range of the power battery 115, the second set threshold may also be any value in the normal working temperature range of the power battery 115, and the first set threshold is greater than the second set threshold. When the temperature of the power battery 115 is higher than the first set threshold, it indicates that the temperature of the power battery 115 is high. The second control circuit 103 controls the bridge arm middle point of the fifth bridge arm to output the third alternating current, so that the compressor 173 works, thereby reducing the temperature of the power battery 115.

When the temperature of the power battery 115 is lower than the second set threshold, it indicates that the temperature of the power battery 115 is low. The second control circuit 103 controls the bridge arm middle point of the sixth bridge arm to output the third alternating current, so that the PTC 183 works, thereby increasing the temperature of the power battery 115.

Because the third group of bridge arms 107 are configured to control the drive motor 114 to output torque, in a charging process of the power battery 115, the first group of bridge arms 105 circuits and the second group of bridge arms 106 convert the multi-phase alternating current into the first direct current and output the first direct current to the second direct current bus 162, to charge the power battery 115. To avoid unexpected torque output of the drive motor 114 in the charging process of the power battery 115, in response to converting the multi-phase alternating current into the first direct current by the first group of bridge arms 105 and the second group of bridge arms 106, the third control circuit 104 stops controlling the bridge arm middle points of the third group of bridge arms 107 to output the second alternating current, so that the drive motor 114 does not output torque, thereby ensuring safety of the vehicle.

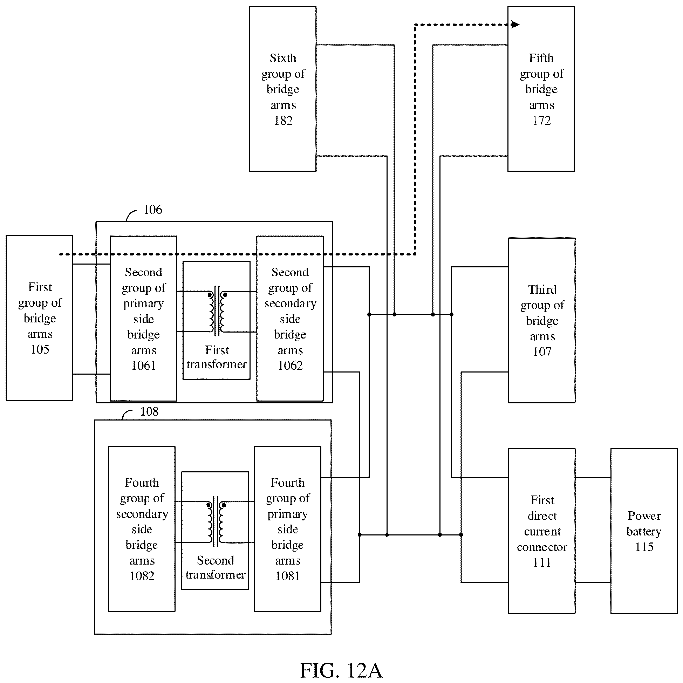

FIG. 12A is a diagram 1 of a current flow direction of an all-in-one power supply apparatus for an electric vehicle according to this application.

When the temperature of the power battery 115 is higher than the first set threshold, the first control circuit 102 controls the first group of bridge arms to receive the first alternating current through the first alternating current connector 109. The second control circuit 103 is configured to control the two ends of the second group of bridge arms 106 to output the first direct current through the first direct current connector 111, and control the bridge arm middle point of the fifth bridge arm to output the third alternating current. In this way, power is supplied to the compressor 173 by using the third alternating current, to reduce the temperature of the power battery 115.

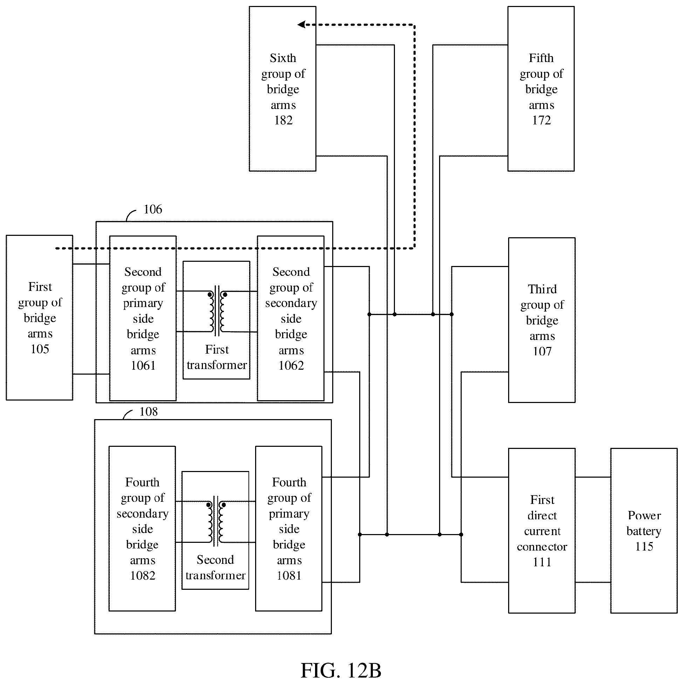

FIG. 12B is a diagram 2 of a current flow direction of an all-in-one power supply apparatus for an electric vehicle according to this application.

When the temperature of the power battery 115 is lower than the second set threshold, the first control circuit 102 controls the first group of bridge arms to receive the first alternating current through the first alternating current connector 109. The second control circuit 103 is configured to control the two ends of the second group of bridge arms 106 to output the first direct current through the first direct current connector 111, and control the bridge arm middle point of the sixth bridge arm to output the third alternating current. In this way, power is supplied to the PTC 183 by using the third alternating current, to increase the temperature of the power battery 115.

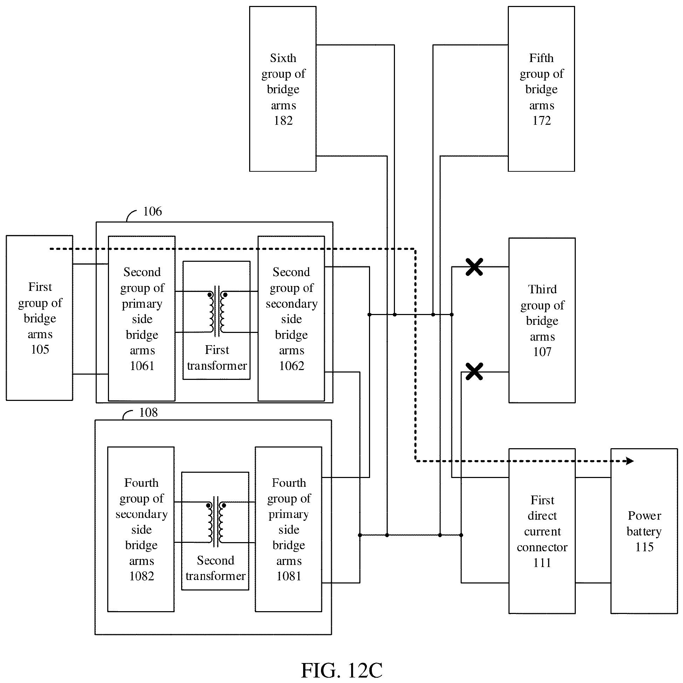

FIG. 12C is a diagram 3 of a current flow direction of an all-in-one power supply apparatus for an electric vehicle according to this application.

The first control circuit 102 controls the first group of bridges to receive the first alternating current through the first alternating current connector 109. The second control circuit 103 is configured to control the two ends of the second group of bridge arms 106 to output the first direct current to the second direct current bus 162 through the first direct current connector 111, to charge the power battery 115. The third control circuit 104 stops controlling the bridge arm middle points of the third group of bridge arms 107 to output the second alternating current, so that the drive motor 114 is not controlled to output torque, thereby ensuring safety of the vehicle.

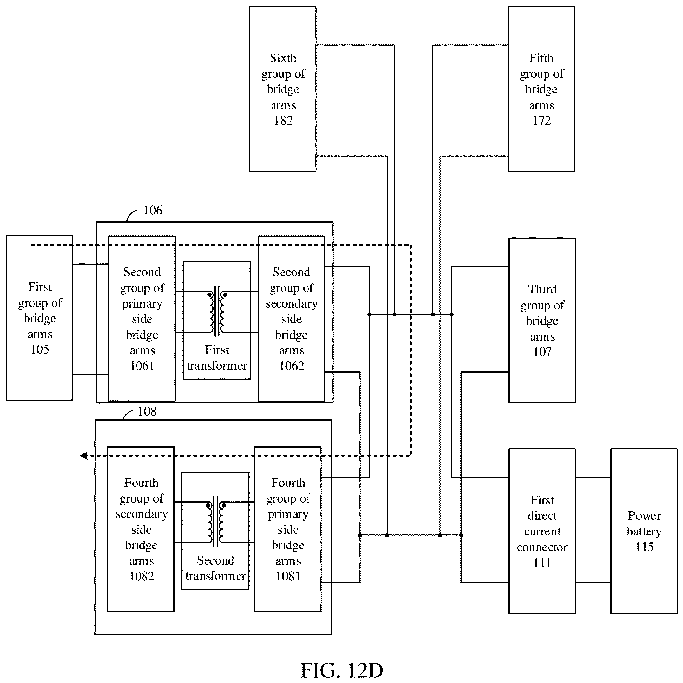

FIG. 12D is a diagram 4 of a current flow direction of an all-in-one power supply apparatus for an electric vehicle according to this application.

Because the first control circuit 102, the second control circuit 103, and the third control circuit 104 are powered by the low voltage battery 116, when a battery level of the low voltage battery 116 is lower than a set threshold, it is difficult for each control circuit to work, so that the entire all-in-one power supply apparatus 100 or even the electric vehicle is in danger.

Therefore, when the battery level of the low voltage battery 116 is lower than the set threshold, the first control circuit 102 controls the first group of bridge arms to receive the first alternating current through the first alternating current connector 109. The second control circuit 103 is configured to control the two ends of the second group of bridge arms 106 to output the first direct current to the second direct current bus 162 through the first direct current connector 111. The fourth group of bridge arms 108 are connected to the second direct current bus 162. An output end of the fourth group of bridge arms 108 outputs the second direct current through the second direct current connector 112, and charges the low voltage battery 116 through the second direct current. This ensures that the control circuit has a normal working voltage.

In a possible implementation, the third control circuit 104 is configured to: in response to the acceleration signal, control bridge arm middle points of the third group of bridge arms 107 to output the second alternating current; and in response to that a battery level of the power battery 115 is lower than a third set threshold, control the bridge arm middle points of the third group of bridge arms 107 to stop outputting the second alternating current.

The third control circuit 104 is configured to: when a driver needs to change a current vehicle speed or a driving direction of the electric vehicle, obtain a series of parameters from driver input apparatuses such as an accelerator pedal, a brake pedal, and a steering wheel, to control the third group of bridge arms 107 to receive, through the second direct current bus 162, power supplied by the power battery 115 or power supplied by the second group of bridge arms 106. In response to the acceleration signal obtained from the accelerator pedal, the third control circuit 104 controls the third group of bridge arms 107 to receive, through the second direct current bus 162, the power supplied by the power battery 115 or the power supplied by the second group of bridge arms 106, to output the second alternating current, and enable the drive motor 114 to output torque through the second alternating current, to drive electric vehicles.

When the battery level of the power battery 115 is excessively low, the electric vehicle may suddenly lose power. As a result, the vehicle may stop in an unsafe or inconvenient place. If the vehicle is parked in the middle of a road or in an emergency stop zone, a risk of a traffic accident is increased. In this way, the bridge arm middle points of the third group of bridge arms 107 are controlled to stop outputting the second alternating current, to avoid a sudden danger during driving.

The all-in-one power supply apparatus provided in this application may share a bridge arm circuit, a power supply circuit, a filter circuit, and a control circuit. The power supply circuit, the bridge arm circuit, and the filter circuit are shared or reused, so that use of components can be reduced, and costs of the power supply apparatus can be reduced. Therefore, a volume and a weight of the power supply apparatus is reduced, and the all-in-one power supply apparatus is more compact. In addition, the shared control circuit may further improve a collaboration capability between the components, to monitor a running status of a component such as a drive motor in real time, and respond quickly. This meets various requirements of the vehicle.

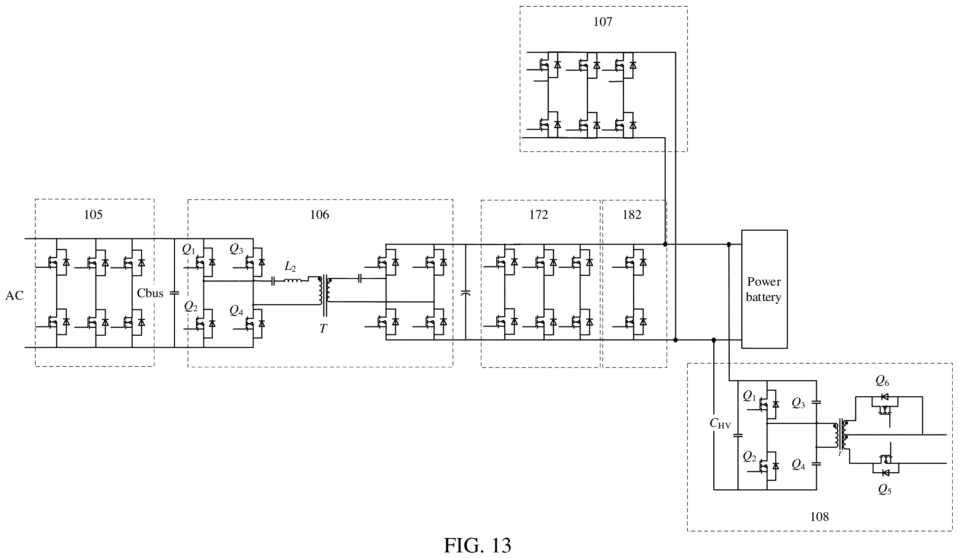

FIG. 13 is a diagram of a specific circuit structure of an all-in-one power supply apparatus 100 according to an embodiment of this application. FIG. 13 shows specific structures of the first group of bridge arms 105, the second group of bridge arms 106, the third group of bridge arms 107, the fourth group of bridge arms 108, the fifth group of bridge arms 172, and the sixth group of bridge arms 182.

Based on a same concept, this application provides a powertrain, where the powertrain includes the all-in-one power supply apparatus 100 and the drive motor described in the foregoing embodiments. The bridge arm middle points of the third group of bridge arms are configured to connect to the multi-phase winding of the drive motor and output the second alternating current to the multi-phase winding of the drive motor.

Based on a same concept, this application further provides an electric vehicle. The electric vehicle includes the all-in-one power supply apparatus 100 in the foregoing embodiment or includes the powertrain in the foregoing embodiment.

It is clearly that, a person skilled in the art can make various modifications and variations to this application without departing from the scope of this application. This application is intended to cover these modifications and variations of this application provided that they fall within the scope of protection defined by the following claims and their equivalent technologies.

## Claims

1. An all-in-one power supply apparatus for an electric vehicle, wherein the all-in-one power supply apparatus comprises a housing, and a first control circuit, a second control circuit, a third control circuit, a first group of bridge arms, a second group of bridge arms, a third group of bridge arms, and a fourth group of bridge arms that are accommodated in the housing;
the housing comprises a plurality of mounting holes, the plurality of mounting holes are respectively configured to mount a first alternating current connector, a second alternating current connector, a first direct current connector, and a second direct current connector, the first alternating current connector is configured to connect to an alternating current power supply, the second alternating current connector is configured to connect to a drive motor of the electric vehicle, the first direct current connector is configured to connect to a power battery of the electric vehicle, and the second direct current connector is configured to connect to a low voltage battery or an in-vehicle load of the electric vehicle;
the first control circuit is configured to control the first group of bridge arms to receive a first alternating current through the first alternating current connector;
the second control circuit is configured to control two ends of the second group of bridge arms to output a first direct current through the first direct current connector or receive, through the first direct current connector, power supplied by the power battery; and
the third control circuit is configured to control bridge arm middle points of the third group of bridge arms to output a second alternating current through the second alternating current connector, and control an output end of the fourth group of bridge arms to output a second direct current through the second direct current connector, wherein a voltage of the second direct current is less than a voltage of the first direct current and a supply voltage of the power battery.

2. The all-in-one power supply apparatus according to claim 1, wherein the all-in-one power supply apparatus comprises a first direct current bus, the first group of bridge arms comprise a plurality of PFC bridge arms, the first direct current bus is configured to connect two ends of the plurality of PFC bridge arms, and the first control circuit is configured to:
control bridge arm middle points of the plurality of PFC bridge arms to receive the first alternating current, and control the two ends of the plurality of PFC bridge arms to output a direct current to the first direct current bus.

3. The all-in-one power supply apparatus according to claim 2, wherein the all-in-one power supply apparatus comprises a first transformer, the second group of bridge arms comprise a plurality of second groups of primary side bridge arms and a plurality of second groups of secondary side bridge arms, the first direct current bus is configured to connect two ends of the plurality of second groups of primary side bridge arms, and the second control circuit is configured to:
control the two ends of the plurality of second groups of primary side bridge arms to receive the direct current transmitted by the first direct current bus, and control bridge arm middle points of the plurality of second groups of primary side bridge arms to output an alternating current to a primary side winding of the first transformer; and
control bridge arm middle points of the plurality of second groups of secondary side bridge arms to receive an alternating current generated by a secondary side winding of the first transformer, and control two ends of the plurality of second groups of secondary side bridge arms to output the first direct current.

4. The all-in-one power supply apparatus according to any one of claims 1 to 3, wherein the all-in-one power supply apparatus comprises a second transformer and a second direct current bus, the fourth group of bridge arms comprise a fourth group of primary side bridge arms and a fourth group of secondary side bridge arms, the fourth group of primary side bridge arms are configured to output an alternating current to a primary side winding of the second transformer, a secondary side winding of the second transformer is configured to connect to the fourth group of secondary side bridge arms, the fourth group of secondary side bridge arms are configured to output the second direct current through the second direct current connector, the second direct current bus is configured to connect two ends of the second group of bridge arms, two ends of the third group of bridge arms, two ends of the fourth group of primary side bridge arms, and the first direct current connector, and the third control circuit is configured to:
control the two ends of the third group of bridge arms to receive, through the second direct current bus, power supplied by the power battery; and
control the two ends of the fourth group of primary side bridge arms to receive, through the second direct current bus, the first direct current or power supplied by the power battery.

5. The all-in-one power supply apparatus according to claim 4, wherein the plurality of mounting holes comprise a compressor connector mounting hole, the compressor connector mounting hole is configured to mount a compressor connector, the all-in-one power supply apparatus comprises a fifth group of bridge arms, and the second control circuit is configured to:
control two ends of the fifth group of bridge arms to receive, through the second direct current bus, the first direct current or power supplied by the power battery, and control bridge arm middle points of the fifth group of bridge arms to output a third alternating current through the compressor mounting connector, wherein the third alternating current is configured to drive a compressor of the electric vehicle.

6. The all-in-one power supply apparatus according to claim 4 or 5, wherein the plurality of mounting holes comprise a PTC connector mounting hole, the PTC connector mounting hole is configured to mount a PTC connector, the all-in-one power supply apparatus comprises a sixth group of bridge arms, and the second control circuit is configured to:
control two ends of the sixth group of bridge arms to receive, through the second direct current bus, the first direct current or power supplied by the power battery, and control bridge arm middle points of the sixth group of bridge arms to output a third direct current through the PTC connector, wherein the third alternating current is configured to supply power to a PTC of the electric vehicle.

7. The all-in-one power supply apparatus according to claim 6, wherein the compressor connector mounting hole and the PTC connector mounting hole are distributed on a same side surface of the housing.

8. The all-in-one power supply apparatus according to any one of claims 1 to 7, wherein the plurality of mounting holes comprise a first alternating current connector mounting hole, a second alternating current connector mounting hole, a first direct current connector mounting hole, a second direct current connector mounting hole, and a mounting hole, the first alternating current connector mounting hole is configured to mount the first alternating current connector, the second alternating current connector mounting hole is configured to mount the second alternating current connector, the first direct current connector mounting hole is configured to mount the first direct current connector, and the second direct current connector mounting hole is configured to mount the second direct current connector;
the first alternating current connector mounting hole and the second alternating current connector mounting hole are respectively distributed on two different side surfaces of the housing; and
a spacing between the first alternating current connector mounting hole and the first direct current connector mounting hole is greater than a spacing between the second alternating current connector and the second direct current connector mounting hole.

9. The all-in-one power supply apparatus according to any one of claims 1 to 8, wherein the housing comprises a signal connector mounting hole, the signal connector mounting hole is configured to mount a signal connector, the third control circuit is configured to receive, through the signal connector, at least one of an acceleration signal generated by an accelerator pedal of the electric vehicle and a braking signal generated by a brake pedal; and
in response to at least one of the acceleration signal or the braking signal, the third control circuit controls a current parameter of the second alternating current output by the bridge arm middle points of the third group of bridge arms.

10. The all-in-one power supply apparatus according to any one of claims 1 to 9, wherein the all-in-one power supply apparatus comprises an isolation apparatus, and the isolation apparatus is configured to isolate electrical interference between the first control circuit, the second control circuit, and the third control circuit;
the first control circuit is configured to send a first reset watchdog signal to the second control circuit, and the second control circuit is configured to perform fault monitoring on the first control circuit based on the first reset watchdog signal; and
the second control circuit is configured to send a second reset watchdog signal to the third control circuit, and the third control circuit is configured to perform fault monitoring on the second control circuit based on the second reset watchdog signal.

11. The all-in-one power supply apparatus according to any one of claims 1 to 10, wherein the all-in-one power supply apparatus comprises the power conversion circuit, and the power conversion circuit is configured to: receive, through the second direct current connector, power supplied by the low voltage battery, and output the third direct current to supply power to the first control circuit, the second control circuit, and the third control circuit.

12. The all-in-one power supply apparatus according to any one of claims 1 to 11, wherein the second control circuit is configured to:
in response to that a temperature of the power battery is higher than a first set threshold, control a bridge arm middle point of the fifth bridge arm to output the third alternating current;
in response to that the temperature of the power battery is lower than a second set threshold, control a bridge arm middle point of the sixth bridge arm to output the third direct current; and
in response to converting the multi-phase alternating current into the first direct current by the first group of bridge arms and the second group of bridge arms, output a first control signal to the third control circuit, wherein the first control signal indicates the third control circuit to stop controlling the bridge arm middle points of the third group of bridge arms to output the second alternating current.

13. The all-in-one power supply apparatus according to any one of claims 1 to 12, wherein the third control circuit is configured to:
in response to the acceleration signal, control the bridge arm middle points of the third group of bridge arms to output the second alternating current; and
in response to that a battery level of the power battery is lower than a third set threshold, control the bridge arm middle points of the third group of bridge arms to stop outputting the second alternating current.

14. A powertrain, wherein the powertrain comprises the all-in-one power supply apparatus according to any one of claims 1 to 13 and a drive motor, bridge arm middle points of the third group of bridge arms are configured to connect to a multi-phase winding of the drive motor and output a second alternating current to the multi-phase winding of the drive motor.

15. An electric vehicle, wherein the electric vehicle comprises the all-in-one power supply apparatus according to any one of claims 1 to 13 or comprises the powertrain according to claim 14.
